# EUROPÄISCHE PATENTANMELDUNG

(11) **EP 0 784 151 A1**
(43) Veröffentlichungstag der Anmeldung: **16.07.1997**
(21) Anmeldenummer: 96117037.0
(22) Anmeldetag: 24.10.1996
(51) Int. Cl.: F01P 5/10, B60H 1/03

(54) **Kühlwasserpumpe für einen Verbrennungsmotor**

(30) Priorität: 11.01.1996 DE 19600735
(71) Anmelder: SUSPA COMPART Aktiengesellschaft, D-90518 Altdorf (DE)
(72) Erfinder: Bauer, Hans-Peter, 90518 Altdorf (DE)
(74) Vertreter: Rau, Manfred, Dr. Dipl.-Ing.

(57) **Zusammenfassung**

Eine Kühlwasserpumpe (1) für einen Verbrennungsmotor weist ein Lagergehäuse (15) für die Welle (16) des Pumpenrades (4) auf. Am äußeren Ende der Welle (16) ist eine Riemenscheibe (23) angebracht. Auf dem Lagergehäuse (15) ist eine als sogenannte Visco-Heizung ausgestaltete Heizvorrichtung (26) als weitgehend selbständiger Zusatz-Bausatz angeordnet.

## Beschreibung

Die Erfindung betrifft eine Kühlwasserpumpe für einen Verbrennungsmotor nach dem Oberbegriff des Anspruches 1.

Derartige Kühlwasserpumpen sind allgemein bekannt und in der Praxis weit verbreitet.

Aus der älteren nicht vorveröffentlichten DE 44 20 481 A ist eine Heizvorrichtung für das Kühlwasser eines mit einer Kühlwasser-Pumpe versehenen Verbrennungs-Motors bekannt, die ein eine Arbeitskammer mit viskoser Flüssigkeit umschließendes Gehäuse aufweist. In der Arbeitskammer ist ein Rotor angeordnet, der Spalte zu Wänden des Gehäuses begrenzt. Es ist ein der Arbeitskammer benachbarter Kühlwasserraum vorhanden. Diese Ausgestaltung ermöglicht es, mit einfachen Mitteln und geringem Aufwand mit vom Verbrennungsmotor selbst abgeleiteter Rotationsenergie das Kühlwasser des Motors sehr schnell aufzuheizen, so daß zum einen die üblicherweise mit der Motorwärme durchgeführte Beheizung des Fahrgastraumes sehr schnell in volle Funktion kommt. Zum anderen wird hierdurch die Erwärmung des Motors beschleunigt, wodurch der im kalten Betrieb hohe Verschleiß des Motors reduziert wird. Die Heizvorrichtung zeichnet sich weiterhin dadurch aus, daß sie in dem Gehäuse einen geschlossenen Arbeitsraum hat, so daß die viskose Flüssigkeit ständig nur in diesem Arbeitsraum enthalten ist. Der Antrieb erfolgt über eine steuerbare, d.h. schaltbare Kupplung. Bei diesem Motor wird die Heizvorrichtung in irgendeiner Form als eigenständige Einheit am Motor angebracht.

Aus der EP 0 361 053 B1 (entspr. US-Patent 4 974 778) und dem US-Patent 3 591 079 sind Heizvorrichtungen bekannt, die dem allgemeinen Prinzip nach in gleichartiger Weise mechanische Energie durch Flüssigkeitsscherung, d.h. durch Erzeugung innerer Reibung der Flüssigkeit, in Wärme umsetzen.

Aus der älteren nicht vorveröffentlichten DE 195 21 029 A ist es bekannt, bei einer Heizvorrichtung nach der DE 44 20 481 A die Welle als Hohlwelle auszubilden und mit einem Kühlwasser-Zuführkanal und einem Kühlwasser-Abführkanal zu versehen, die mit dem Kühlwasserraum verbunden sind, wobei die Hohlwelle die Antriebs-Welle der Kühlwasserpumpe ist. Hierdurch wird erreicht, daß die Heizvorrichtung in die ohnehin bei einem wassergekühlten Verbrennungsmotor vorhandene Kühlwasserpumpe integriert wird, so daß der Antrieb der Kühlwasserpumpe einerseits und der Antrieb der Heizvorrichtung andererseits nicht mehr gesondert, sondern gemeinsam erfolgen. Die Integration der Heizvorrichtung in die Kühlwasserpumpe kann sehr platzsparend erfolgen.

Der Erfindung liegt die Aufgabe zugrunde, die Kühlwasserpumpe der gattungsgemäßen Art und eine Heizvorrichtung der erläuterten Art so auszugestalten, daß sie in sehr raumsparender Weise miteinander verbindbar sind.

Diese Aufgabe wird bei einer Kühlwasserpumpe der gattungsgemäßen Art durch die Merkmale im Kennzeichnungsteil des Anspruches 1 gelöst. Nach der Erfindung ist es möglich, die Heizvorrichtung als gesondertes Bauteil in dem Raum zwischen dem Gehäuse der Kühlwasserpumpe und der Riemenscheibe auf dem Lagergehäuse der Kühlwasserpumpe unterzubringen. Dieses Lagergehäuse muß ohnehin eine beträchtliche Erstreckung in Richtung der Mittel-Achse der Kühlwasserpumpe aufweisen, damit die von der Riemenscheibe auf die Welle der Kühlwasserpumpe ausgeübten erheblichen Querkräfte aufgefangen werden. An der Kühlwasserpumpe selber sind nur geringfügige, im wesentlichen auf deren Deckel beschränkte Anpassungsmaßnahmen notwendig, um die Kühlwasserpumpe für sich allein oder zusammen mit der Heizvorrichtung an einem Verbrennungsmotor anzubringen. Durch die erfindungsgemäßen Maßnahmen wird also ein Bausatz geschaffen, bei dem als zusätzliches Element die Heizvorrichtung im ohnehin vorhandenen Bauraum der Kühlwasserpumpe untergebracht werden kann.

Vorteilhafte Ausgestaltungen ergeben sich aus den Unteransprüchen.

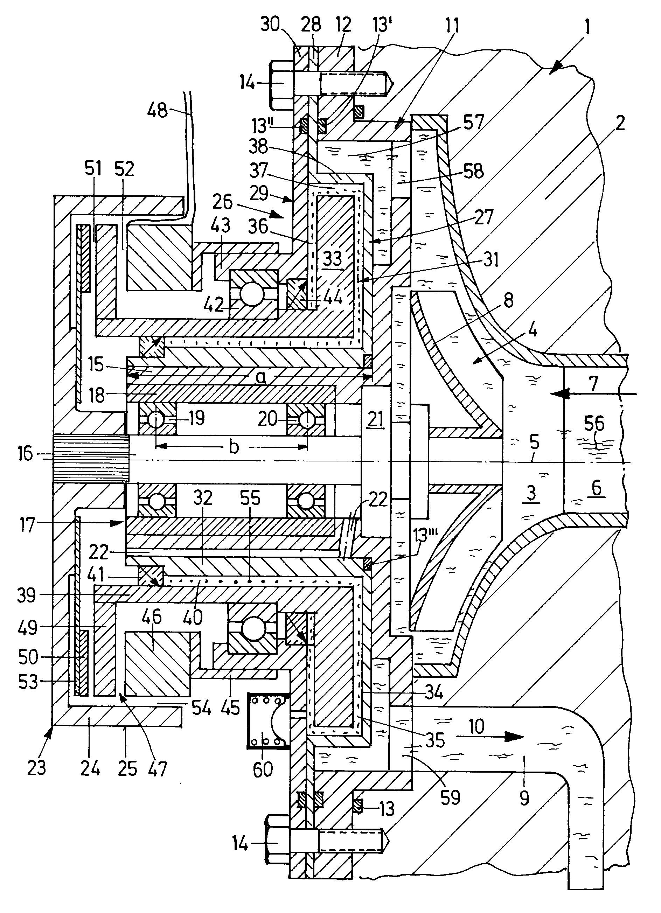

Weitere Merkmale, Vorteile und Einzelheiten der Erfindung ergeben sich der aus der nachfolgenden Beschreibung eines Ausführungsbeispieles anhand der Zeichnung, die in schematischer Darstellung eine Kühlwasserpumpe mit hinzugefügter Heizvorrichtung im Längsschnitt zeigt.

Die in der Zeichnung dargestellte Kühlwasserpumpe 1 für einen Verbrennungsmotor, insbesondere also für einen Otto- oder Diesel-Motor für ein Kraftfahrzeug, weist ein Gehäuse 2 auf, das durch das Motorgehäuse selber oder durch ein gegenüber dem Motorgehäuse selbständiges Gehäuse gebildet sein kann. In diesem Gehäuse 2 ist ein Pumpenraum 3 ausgebildet, der einem Pumpenrad 4 in seiner Form angepaßt ist. Konzentrisch zur Mittel-Achse 5 des Pumpenrades 4 mündet ein Zuführkanal 6 in den Pumpenraum 3. Dieser Zuführkanal 6 bildet den Ansaugteil der Kühlwasserpumpe 1. Das durch den Zuführkanal 6 in Strömungsrichtung 7 vom Kühlkreislauf des Motors zugeführte Kühlwasser wird mittels der Schaufeln 8 des Pumpenrades 4 radial zur Achse 5 zur Druckseite des Pumpenraumes 3 hin gefördert, von wo aus es einem Abführkanal 9 zugeführt wird, durch den es in Strömungsrichtung 10 wieder in den Kühlkreislauf des Motors zurückströmt.

Der Pumpenraum 3 ist mittels eines Deckels 11 nach außen verschlossen, der mit einem Flansch 12 unter Zwischenschaltung einer Dichtung 13 am Gehäuse 2 anliegt und dort mittels Schrauben 14 befestigt ist.

Am Deckel 11 ist ein nach außen, also vom Pumpenraum 3 weg, ragendes, im wesentlichen ringzylindrisches und zur Achse 5 konzentrisches Lagergehäuse 15 ausgebildet. In diesem Lagergehäuse 15 ist die Welle 16 des Pumpenrades 4 mit einem Lager-Satz 17 gelagert, der eine Länge a aufweist.

Der Lagersatz 17 besteht in üblicher Weise aus einer äußeren, im Lagergehäuse 15 angeordneten Lagerhülse 18, in der zwei im Abstand voneinander angeordnete Wälzlager 19, 20 angeordnet sind, die die Welle 16 gegenüber der Lagerhülse 18 abstützen. Die Wälzlager 19, 20 weisen einen Abstand b voneinander auf. Zwischen dem Lagergehäuse 15 und dem Pumpenraum 3 ist auf der Welle 16 eine den Pumpenraum 3 zum Lagergehäuse 15 hin dichtende Dichtung 21 angeordnet. Zwischen der Dichtung 21 und dem Lagersatz 17 ist im Lagergehäuse 15 ein Leckwasserkanal 22 ausgebildet. Auf dem außerhalb des Lagergehäuses 15 liegenden Ende der Welle 16 ist eine Riemenscheibe 23 angebracht, deren Außenring 24 sich in Richtung zum Gehäuse 2 hin erstreckt, sich also teilweise mit dem Lagergehäuse 15 überdeckt. Der Außerring 24 nimmt auf seiner Außenseite 25 einen oder mehrere nicht dargestellte Antriebsriemen auf. Die Lange a des Lagergehäuses und insbesondere der Abstand b der beiden Wälzlager 19, 20 muß eine gewisse Größe haben, damit die von der Riemenscheibe 23 auf die Welle 16 quer zur Achse 5 ausgeübten Querkräfte aufgenommen werden können.

Auf dem Lagergehäuse 15 und zum Teil innerhalb des Außenringes 24 der Riemenscheibe 23 ist eine Heizvorrichtung 26 angeordnet. Sie weist ein teilweise am Deckel 11 anliegendes Rotor-Gehäuse 27 auf, das an seiner Außenseite mit einem Ringflansch 28 versehen ist, der unter Zwischenschaltung einer Dichtung 13' gegen den Flansch 12 anliegt und der ebenfalls von den Schrauben 14 durchsetzt wird. Das Rotor-Gehäuse 27 wird an seiner außenliegenden, der Riemenscheibe 23 zugewandten Seite von einem Lager-Deckel 29 verschlossen, der ebenfalls unter Zwischenschaltung einer Dichtung 13'' mit einem Ringflansch 30 gegen den Ringflansch 28 des Rotor-Gehäuses 27 anliegt und ebenfalls von den Schrauben 14 durchsetzt wird. Der Lager-Deckel 29 schließt eine im Rotor-Gehäuse 27 ausgebildete im wesentlichen zylinderscheiberförmige Arbeitskammer 31 ab. Das Rotor-Gehäuse 27 ist mit einer konzentrisch zur Achse 5 verlaufenden Stützhülse 32 versehen, die die Außenseite des Lagergehäuses 15 umgibt. Das Rotor-Gehäuse 27 ist im übrigen mittels einer Dichtung 13''' gegen den Deckel 11 abgedichtet.

In der Arbeitskammer 31 des Rotor-Gehäuses 27 ist ein ringzylinderscheibenförmiger Rotor 33 konzentrisch zur Achse 5 angeordnet, der sowohl zur benachbarten Stirnwand 34 des Rotor-Gehäuses 27 als auch zum ebenfalls stirnseitig benachbarten Lager-Deckel 29 jeweils einen Spalt 35, 36 begrenzt, der im wesentlichen ringzylinderscheibenförmig ist. Im übrigen begrenzt der Rotor 33 auch noch einen Ringspalt 37 zur Umfangswand 38 des Rotor-Gehäuses 27. Der Rotor 33 weist konzentrisch zur Mittel-Achse 5 eine als Hohlwelle ausgebildete Rotor-Welle 39 auf, die die Stützhülse 32 mit radialem Abstand umgibt, so daß zwischen der Rotor-Welle 39 und der Stützhülse 32 noch ein zur Arbeitskammer 31 gehörender Ringraum 40 gebildet wird, der nach außen durch eine Dichtung 41 verschlossen ist. Die als Hohlwelle ausgebildete Rotor-Welle 39 ist mittels eines Wälzlagers 42 in einem Lagerbund 43 abgestützt und gelagert. Dieser Lagerbund 43 ist einstückig mit dem Lager-Deckel 29 des Rotor-Gehäuses 27 ausgebildet und verläuft konzentrisch zur Mittel-Achse 5. Zwischen dem Wälzlager 42 und der Arbeitskammer 31 befindet sich eine Dichtung 44.

An dem Lagerbund 43 des Lager-Deckels 29 ist eine Halterung 45 angebracht, an der wiederum ein Elektromagnet 46 einer Elektromagnet-Kupplung 47 befestigt ist. Der Elektromagnet 46 wird über Leitungen 48 mit elektrischem Strom versorgt. Dieser Elektromagnet 46 ist also gegenüber dem Lager-Deckel 29 und damit gegenüber dem Rotor-Gehäuse 27 der Heizvorrichtung ortsfest und undrehbar. Zwischen dem Elektromagnet 46 und der Riemenscheibe 23 ist eine ringförmige Kupplungsscheibe 49 angeordnet, die fest mit der Rotor-Welle 39 verbunden ist. Auf der dem Elektromagnet 46 abgewandten Seite der Kupplungsscheibe 49 ist eine ringförmige Ankerscheibe 50 angeordnet, die bei nicht erregtem Elektromagneten 46 einen Luftspalt 51 von höchstens einigen Zehntel Millimetern zur Kupplungsscheibe 49 begrenzt, so daß bei Erregung des Elektromagneten 46 durch Stromzufuhr über die Leitungen 48 die Ankerscheibe 50 gegen die Kupplungsscheibe 49 angezogen wird. Aufgrund der geringen Weite des Luftspalts 51 und des Luftspalts 52 zwischen dem Elektromagnet 46 und der Kupplungsscheibe 49 ist deren magnetischer Widerstand gering. Die Ankerscheibe 50 ist mittels eines federelastischen Halters 53 an der Riemenscheibe 23 drehfest befestigt. Der Halter 53 ist in Richtung der Mittel-Achse 5 federelastisch. Bei einer Erregung des Elektromagneten 46 wird also die ringförmige Ankerscheibe 50 unter federelastischer Verformung des Halters 53 gegen die Kupplungsscheibe 49 angezogen und nimmt diese, da die Riemenscheibe 23 und damit die Ankerscheibe 50 drehangetrieben sind, durch Reibschluß mit und treibt somit die Rotor-Welle 39 und damit den Rotor 33 an. Wenn dagegen die Stromzufuhr zum Elektromagneten 46 abgeschaltet wird, wird dieser entregt, so daß die Ankerscheibe 50 aufgrund der federelastischen Rückstellkraft des Halters 53 wieder von der Kupplungsscheibe 49 abgehoben wird. Der Drehantrieb des Rotors 31 wird also unterbrochen. Die Kupplungsscheibe 49 sollte aus nichtferromagnetischem Material bestehen, um einen magnetischen Kurzschluß zu vermeiden. Der Magnetpfad ist vom Elektromagneten 46 über den Außenring 24 der Riemenscheibe 23, die Riemenscheibe 23, den Halter 53 und die Ankerscheibe 50 zurück zum Elektromagneten 46 geführt; diese Teile bestehen daher aus ferromagnetischem Werkstoff. Der ringförmige Luftspalt 54 zwischen dem Elektromagneten 46 und dem Außenring 24 der Riemenscheibe 23 sollte klein sein, um den magnetischen Widerstand gering zu halten.

Die Arbeitskammer 31 ist mit einer Flüssigkeit 55 verhältnismäßig hoher Viskosität gefüllt. Es kann sich hierbei um Silikonöl oder etwas Vergleichbares handeln. Beim Antrieb des Rotors 31 wird die Flüssigkeit 55 insbesondere in den Spalten 35, 36 und im Ringspalt 37 und auch im Ringraum 40 einer hohen Scherung unterworfen, da jeweils eine Begrenzungswand dieser Spalte 35, 36, 37, 40, nämlich die Stirnwand 34, der Lager-Deckel 29, die Umfangswand 38 und die Stützhülse 32 feststehen, während die benachbarten Flächen des Rotors 31 sich mit hoher Umfangsgeschwindigkeit bewegen, da die Drehzahl des Pumpenrades 4 der Kühlwasserpumpe 1 bei modernen Motoren im Bereich zwischen 5.000 und 8.000 Umdrehungen pro Minute liegt. Die auf die Flüssigkeit 55 ausgeübte Scherkraft wird in Wärme umgesetzt, die wiederum vom Kühlwasser 56 abgeführt wird. Hierzu ist zwischen dem Deckel 11 der Kühlwasserpumpe 1 und dem Rotor-Gehäuse 27 der Heizvorrichtung 26 ein ringförmiger Kühlwasserkanal 57 ausgebildet, der über eine Öffnung 58 im Deckel 11 mit dem Abführkanal 9 verbunden ist. Auf der radial zur Achse 5 gegenüberliegenden Seite ist dieser Kühlwasserkanal 57 mittels einer Öffnung 59 im Deckel 11 mit der radial außenliegenden Druckseite des Pumpenraumes 3 verbunden, so daß das Kühlwasser 56 aus dem Pumpenraum 3 durch die Öffnung 59, den Kühlwasserkanal 57 und die Öffnung 58 zum Abführkanal 9 gelangt.

Wenn lediglich die Kühlwasserpumpe 1, aber nicht eine Heizvorrichtung 26 vorgesehen sein soll, dann werden die Öffnungen 58, 59 im Deckel 11 nicht vorgesehen oder in geeigneter Weise verschlossen und eine direkte Verbindung von der radial außenliegenden Druckseite des Pumpenraumes 3 zum Abführkanal 9 geschaffen.

Damit die Flüssigkeit 55 sich bei ihrer Erwärmung ausdehnen kann, ist ein Ausgleichsraum 60 vorgesehen.

Der Begriff "Kühlwasser" umfaßt naturgemäß jede als Wärmeträger geeignete Flüssigkeit.

Die geschilderte Heizvorrichtung 26 kann zur Aufheizung des Motors so angeordnet werden, daß sie im Kurzschluß-Kreislauf betrieben wird. Um die von der Heizvorrichtung 26 erzeugte Wärme optimal nutzen zu können, kann der Kanal 9 auch als Vorlauf zu einem Heizungswärmetauscher dienen.

## Patentansprüche

1. Kühlwasserpumpe für einen Verbrennungsmotor
- mit einem einen Pumpenraum (3) teilweise umschließenden Gehäuse (1),
- mit einem den Pumpenraum (3) verschließenden Deckel (11),
- mit einem mit einer Saugseite des Pumpenraumes (3) verbundenen Zuführkanal (6) für Kühlwasser (56),
- mit einem mit einer Druckseite des Pumpenraumes (3) verbundenen Abführkanal (9) für Kühlwasser (56),
- mit einem im Pumpenraum (3) angeordneten Pumpenrad (4),
- mit einer mit dem Pumpenrad (4) verbundenen Welle (16),
- mit einem am Deckel (11) angeordneten und von diesem vorspringenden Lagergehäuse (15), in dem die Welle (16) drehbar abgestützt ist,
- mit einer drehfest mit der Welle (16) verbundenen Riemenscheibe (23),
gekennzeichnet durch eine Heizvorrichtung (26)
- mit einem eine mit viskoser Flüssigkeit (55) gefüllte Arbeitskammer (31) umschließenden, gegenüber dem Gehäuse (2) der Kühlwasserpumpe (1) undrehbaren Rotor-Gehäuse (27),
- mit einem in der Arbeitskammer (31) angeordneten Spalte (35, 36, 37, 40) zu Wänden (34, 29, 38, 32) des Rotor-Gehäuses (27) begrenzenden Rotor (33),
- mit einer mit dem Rotor (33) verbundenen, als Hohlwelle ausgebildeten und das Lagergehäuse (15) umgebenden, drehbar gelagerten Rotor-Welle (39) und
- mit einer Elektromagnet-Kupplung (47) zum wahlweisen Verbinden der Rotor-Welle (39) mit der Riemenscheibe (23).

2. Kühlwasserpumpe nach Anspruch 1, dadurch gekennzeichnet, daß das Rotor-Gehäuse (27) zumindest teilweise im Deckel (11) der Kühlwasserpumpe (1) angeordnet ist und zwischen diesen ein einerseits mit dem Pumpenraum (3) und andererseits mit dem Abführkanal (9) für Kühlwasser (56) verbundener Kühlwasserkanal (57) ausgebildet ist.

3. Kühlwasserpumpe nach Anspruch 1 der 2, dadurch gekennzeichnet, daß der Deckel (11) der Kühlwasserpumpe (1) und das Rotor-Gehäuse (27) einander überdeckend am Gehäuse (2) der Kühlwasserpumpe (1) befestigbar sind.

4. Kühlwasserpumpe nach einem der Ansprüche 1 bis 3, dadurch gekennzeichnet, daß das Rotor-Gehäuse (27) mit einer das Lagergehäuse (15) umgebenden Stützhülse (32) versehen ist.

5. Kühlwasserpumpe nach einem der Ansprüche 1 bis 4, dadurch gekennzeichnet, daß das Rotor-Gehäuse (27) mittels eines Deckels (29) verschließbar ist, der deckungsgleich mit dem Deckel (11) am Gehäuse (2) der Kühlwasserpumpe (1) befestigbar ist.

6. Kühlwasserpumpe nach einem der Ansprüche 1 bis 5, dadurch gekennzeichnet, daß das Rotor-Gehäuse (27) mittels eines Lager-Deckels (29) verschließbar ist, in dem die Rotor-Welle (39) drehbar gelagert ist.

7. Kühlwasserpumpe nach einem der Ansprüche 1 bis 6, dadurch gekennzeichnet, daß an der Rotor-Welle (39) eine Kupplungsscheibe (49) der Elektromagnet-Kupplung (47) angebracht ist, der eine mit der Riemenscheibe (23) gekuppelte Ankerscheibe (50) zugeordnet ist.

8. Kühlwasserpumpe nach einem der Ansprüche 1 bis 7, dadurch gekennzeichnet, daß ein Elektromagnet (46) der Elektromagnet-Kupplung (47) im wesentlichen innerhalb eines Außenringes (24) der Riemenscheibe (23) angeordnet ist.
